# EUROPÄISCHE PATENTSCHRIFT

(11) **EP 4 089 045 B1**
(45) Veröffentlichungstag und Bekanntmachung des Hinweises auf die Patenterteilung: **06.08.2025**
(21) Anmeldenummer: 22168928.4
(22) Anmeldetag: 20.04.2022
(51) Int. Cl.: B66D 1/50, B66D 1/74

(54) **VERFAHREN ZUM BETRIEB EINER FORSTSEILWINDE UND FORSTSEILWINDE**
METHOD FOR OPERATING A FORESTRY WINCH AND FORESTRY WINCH
PROCÉDÉ PERMETTANT DE FAIRE FONCTIONNER UN TREUIL FORESTIER ET TREUIL FORESTIER

(30) Priorität: 12.05.2021 DE 102021112421; 25.05.2021 DE 102021113379
(43) Veröffentlichungstag der Anmeldung: 16.11.2022
(73) Patentinhaber: Suffel Fördertechnik GmbH & Co. KG, 63741 Aschaffenburg (DE)
(72) Erfinder: WILLENBÜCHER, Michael, 64760 Oberzent (DE); HOFMANN, Claus, 63808 Haibach (DE); WELSCHOF, Bernward, 63762 Großostheim (DE)
(74) Vertreter: Patentship Patentanwaltgesellschaft

(56) Entgegenhaltungen:
- DE-A1- 102019 220 133
- DE-B3- 102011 122 121
- DE-U1- 202005 020 694
- FR-A1- 2 487 802

## Beschreibung

Die Erfindung betrifft ein Verfahren zum Betrieb einer Forstseilwinde, die eine von einem Antriebsmotor angetriebene Seiltrommel aufweist, auf der ein Seil aufgespult ist, und eine von einem weiteren Antriebsmotor angetriebene Seilauswerferrolle für das Seil aufweist, wobei das Seil von der Seiltrommel zur Seilauswerferrolle geführt ist und an der Seilauswerferrolle umgelenkt ist, wobei der Antriebsmotor der Seiltrommel und der weitere Antriebsmotor der Seilauswerferrolle derart betrieben werden, dass beim Seilabspulen des Seils von der Seiltrommel und beim Seilaufspulen des Seils auf die Seiltrommel in dem Abschnitt des Seils zwischen der Seiltrommel und der Seilauswerferrolle eine Mindestseilvorspannung, insbesondere eine konstante Mindestseilvorspannung, erzeugt wird.

Bei Forstseilwinden ist es bekannt, das auf der Seiltrommel, die von einem Antriebsmotor angetrieben ist, befindliche Seil über eine Seilauswerferrolle zu führen, die von einem weiteren Antriebsmotor angetrieben ist.

Bei derartigen Forstseilwinden ist es gewünscht, das Seil beim Seilabspulen des Seils sicher und geordnet von der Seiltrommel abzuspulen sowie das beim Seilaufspulen des Seils auf die Seiltrommel sicher und geordnet auf die Seiltrommel aufzuspulen, um einen störungsarmen und seilschonenden Betrieb der Forstseilwinde zu ermöglichen.

Aus der DE 20 2005 020 694 A1 ist ein gattungsgemäßes Verfahren zum Betrieb einer Forstseilwinde mit den Merkmalen des Oberbegriffs des Patentanspruchs 1 bekannt.

Die DE 10 2011 122 121 B3 offenbart eine Forsteilwinde mit einer Zugseilwindentrommel, einer Umlaufseilwindentrommel und einer Tragseilwindentrommel, wobei zum Antrieb der drei Seilwindentrommeln zwei Elektromotoren und entsprechende Kupplungen vorgesehen sind.

Die FR 2 487 802 A1 offenbart eine Seilwinde mit einer von einem Hydraulikmotor angetriebenen Seiltrommel und einer von einem zweiten Hydraulikmotor angetriebenen Seilauswerferrolle.

Der vorliegenden Erfindung liegt die Aufgabe zugrunde, ein Verfahren zum Betrieb einer gattungsgemäßen Forstseilwinde zur Verfügung zu stellen, mit der ein sicheres und geordnetes Abspulen des Seils von der Seiltrommel beim Seilabspulen des Seils von der Seiltrommel und ein sicheres und geordnetes Aufspulen des Seils auf die Seiltrommel beim Seilaufspulen des Seils auf die Seiltrommel erzielt wird.

Diese Aufgabe wird erfindungsgemäß durch das Verfahren nach Anspruch 1 sowie die Forstseilwinde nach Anspruch 15 gelöst, wobei der Antriebsmotor der Seiltrommel als Hydraulikmotor ausgebildet ist, der mittels einer ersten Druckmittelleitung und einer zweiten Druckmittelleitung an eine den Antriebsmotor steuernde Steuerwegeventileinrichtung angeschlossen ist und dass der weitere Antriebsmotor der Seilauswerferrolle als Hydraulikmotor ausgebildet ist, der mittels einer ersten Anschlussleitung und einer zweiten Anschlussleitung an eine den weiteren Antriebsmotor steuernde weitere Steuerwegeventileinrichtung angeschlossen ist, wobei die den Antriebsmotor der Seiltrommel steuernde Steuerwegeventileinrichtung und die den weiteren Antriebsmotor der Seilauswerferrolle steuernde weitere Steuerwegeventileinrichtung derart betrieben werden, dass beim Seilabspulen des Seils von der Seiltrommel und beim Seilaufspulen des Seils auf die Seiltrommel in dem Abschnitt des Seils zwischen der Seiltrommel und der Seilauswerferrolle die Mindestseilvorspannung, insbesondere eine konstante Mindestseilvorspannung, erzeugt wird, wobei die Steuerwegeventileinrichtung und die weitere Steuerwegeventileinrichtung von einer in der Fördermenge verstellbaren Pumpenvorrichtung mit Druckmittel versorgt wird und die den weiteren, als Hydraulikmotor ausgebildeten Antriebsmotor der Seilauswerferrolle steuernde weitere Steuerwegeventileinrichtung beim Seilaufspulen und beim Seilabspulen in Richtung einer Abspulsteuerstellung betätigt wird, in der eine Förderleitung der Pumpenvorrichtung mit der ersten Anschlussleitung verbunden ist und die zweite Anschlussleitung mit einer Tankleitung verbunden ist.

Erfindungsgemäß wird durch einen entsprechenden Betrieb des Antriebsmotors der Seiltrommel und des weiteren Antriebsmotors der Seilauswerferrolle beim Seilabspulen des Seils von der Seiltrommel sowie beim Seilaufspulen des Seils auf die Seiltrommel über den gesamten Geschwindigkeitsbereich eine bevorzugt konstante Mindestseilvorspannung auf das Seil aufgebracht, die ein sicheres und geordnetes Abspulen des Seils von der Seiltrommel beim Seilabspulen und ein sicheres und geordnetes Aufspulen des Seils auf die Seiltrommel beim Seilaufspulen sicherstellt. Hierdurch kann mit geringem Bauaufwand und auf einfache Weise ohne eine mechanische Bremseinrichtung an dem weiteren Antriebsmotor oder an der Seilauswerferrolle ein sicheres, geordnetes und seilschonendes Abspulen des Seils von der Seiltrommel beim Seilabspulen sowie ein sicheres, geordnetes und seilschonendes Aufspulen des Seils auf die Seiltrommel beim Seilaufspulen erzielt werden.

Gemäß der Erfindung ist der Antriebsmotor der Seiltrommel als Hydraulikmotor ausgebildet, der mittels einer ersten Druckmittelleitung und einer zweiten Druckmittelleitung an eine den Antriebsmotor steuernde Steuerwegeventileinrichtung angeschlossen ist und ist der weitere Antriebsmotor der Seilauswerferrolle als Hydraulikmotor ausgebildet, der mittels einer ersten Anschlussleitung und einer zweiten Anschlussleitung an eine den weiteren Antriebsmotor steuernde weitere Steuerwegeventileinrichtung angeschlossen ist, wobei die den Antriebsmotor der Seiltrommel steuernde Steuerwegeventileinrichtung und die den weiteren Antriebsmotor der Seilauswerferrolle steuernde weitere Steuerwegeventileinrichtung derart betrieben werden, dass beim Seilabspulen des Seils von der Seiltrommel und beim Seilaufspulen des Seils auf die Seiltrommel in dem Abschnitt des Seils zwischen der Seiltrommel und der Seilauswerferrolle die Mindestseilvorspannung, insbesondere eine konstante Mindestseilvorspannung, erzeugt wird. Ein als Hydraulikmotor, der mittels einer Steuerwegeventileinrichtung ansteuerbar ist, ausgebildeter Antriebsmotor der Seiltrommel und ein als Hydraulikmotor, der mittels einer weiteren Steuerwegeventileinrichtung ansteuerbar ist, ausgebildeter weiterer Antriebsmotor der Seilauswerferrolle ermöglichen es in einfacher Weise, durch entsprechenden Betrieb der Steuerwegeventileinrichtungen beim Seilabspulen des Seils von der Seiltrommel und beim Seilaufspulen des Seils auf die Seiltrommel in dem Abschnitt des Seils zwischen der Seiltrommel und der Seilauswerferrolle die gewünschte Mindestseilvorspannung zu erzeugen.

Gemäß der Erfindung wird die Steuerwegeventileinrichtung und die weitere Steuerwegeventileinrichtung von einer in der Fördermenge verstellbaren Pumpenvorrichtung mit Druckmittel versorgt. Die Pumpenvorrichtung kann eine oder mehrere Konstantpumpen aufweisen, die zur Verstellung der Fördermenge von einer Antriebsmaschine in der Drehzahl variabel angetrieben werden.

Gemäß der Erfindung wird die den weiteren Antriebsmotor der Seilauswerferrolle steuernde weitere Steuerwegeventileinrichtung beim Seilaufspulen und beim Seilabspulen in Richtung einer Abspulsteuerstellung betätigt, in der eine Förderleitung der Pumpenvorrichtung mit der ersten Anschlussleitung verbunden ist und die zweite Anschlussleitung mit einer Tankleitung verbunden ist. Die den Antriebsmotor der Seilauswerferrolle ansteuernde Steuerwegeventileinrichtung weist somit nur eine Abspulsteuerstellung auf, in die die Steuerwegeventileinrichtung beim Seilabspulen und beim Seilaufspulen betätigt wird. Beim Seilabspulen, wobei der die Seiltrommel antreibende Antriebsmotor in Abspulrichtung in einem Motorbetrieb betrieben wird, kann in der Abspulsteuerstellung ein Motorbetrieb des die Seilauswerferrolle antreibenden Antriebsmotors erzielt werden und somit das Seil von dem die Seilauswerferrolle in Abspulrichtung im Motorbetrieb antreibenden Antriebsmotor unter Aufrechterhaltung der Mindestseilvorspannung von der Seiltrommel abgespult werden. Beim Seilaufspulen, wobei der die Seiltrommel antreibende Antriebsmotor in Aufspulrichtung in einem Motorbetrieb betrieben wird, kann mit der Abspulsteuerstellung der den Antriebsmotor der Seilauswerferrolle steuernden Steuerwegeventileinrichtung in einfacher Weise ein Pumpenbetrieb des Antriebsmotor der Seilauswerferrolle und somit eine Bremswirkung des Antriebsmotors der Seilauswerferrolle erzielt werden, mit der unter Aufrechterhaltung der Mindestseilvorspannung das Seil auf die Seiltrommel aufgespult wird.

Die Pumpenvorrichtung weist bevorzugt eine erste in der Fördermenge verstellbare Verstellpumpe auf, die die Steuerwegeventileinrichtung mit Druckmittel versorgt, und eine zweite in der Fördermenge verstellbare Verstellpumpe auf, die die weitere Steuerwegeventileinrichtung mit Druckmittel versorgt. Mit zwei in der Fördermenge verstellbaren Verstellpumpen, von denen eine den Hydraulikmotor der Seiltrommel und die andere den Hydraulikmotor der Seilauswerferrolle versorgt, können die beiden Hydraulikmotoren in einfacher und energetisch günstiger Weise getrennt voneinander derart betrieben werden, dass beim Seilabspulen des Seils von der Seiltrommel sowie beim Seilaufspulen des Seils auf die Seiltrommel eine gewünschte Mindestseilvorspannung auf den Abschnitt des Seils zwischen der Seiltrommel und der Seilauswerferrolle aufgebracht wird.

Gemäß einer vorteilhaften Ausführungsform der Erfindung werden der Antriebsmotor der Seiltrommel und der weitere Antriebsmotor der Seilauswerferrolle derart betrieben, dass beim Seilabspulen des Seils von der Seiltrommel der die Seiltrommel antreibende Antriebsmotor in einem Motorbetrieb oder in einem Umlaufbetrieb betrieben wird und der die Seilauswerferrolle antreibende weitere Antriebsmotor in einem Motorbetrieb betrieben wird, wobei die Seilabspulgeschwindigkeit von dem im Motorbetrieb betriebenen, die Seilauswerferrolle antreibenden weiteren Antriebsmotor bestimmt wird. Durch einen Motorbetrieb des die Seilauswerferrolle antreibenden Antriebsmotors, der die Seilabspulgeschwindigkeit bestimmt, kann beim Seilabspulen in einfacher Weise eine gewünschte Mindestseilvorspannung in dem Abschnitt des Seils zwischen der Seiltrommel und der Seilauswerferrolle erzeugt werden. Die Seilabspulgeschwindigkeit kann hierbei durch entsprechende Steuerung der Fördermenge der den Antriebsmotor der Seilauswerferrolle versorgenden Verstellpumpe eingestellt werden. Sofern der die Seiltrommel antreibende Antriebsmotor beim Seilabspulen in einem Umlaufbetrieb betrieben wird, kann der Antriebsmotor der Seiltrommel und die Seiltrommel beim Seilabspulen von dem weiteren Antriebsmotor, der das Seil von der Seiltrommel abspult, gedreht werden. Sofern der die Seiltrommel antreibende Antriebsmotor beim Seilabspulen in einem Motorbetrieb betrieben wird, wird ermöglicht, dass der Antriebsmotor die Seiltrommel unterstützend mitantreibt, um beispielsweise eine hohe Lagerreibung in einer Drehlagerung der Seiltrommel überwinden zu können, die über die angetriebenen Seilauswerferrolle über das Seil nicht aufgebracht werden kann.

Besondere Vorteile ergeben sich, wenn gemäß einer Weiterbildung der Erfindung beim Seilabspulen der Antriebsmotor der Seiltrommel in Abhängigkeit von der Belastung des weiteren Antriebsmotors der Seilauswerferrolle unterstützend betrieben wird.

Gemäß einer vorteilhaften Ausführungsform der Erfindung werden der Antriebsmotor der Seiltrommel und der weitere Antriebsmotor der Seilauswerferrolle derart betrieben, dass beim Seilaufspulen des Seils auf die Seiltrommel der die Seiltrommel antreibende Antriebsmotor in einem Motorbetrieb betrieben wird und der weitere Antriebsmotor in einem Pumpenbetrieb betrieben wird, in dem der weitere Antriebsmotor von der Seilauswerferrolle angetrieben wird, wobei die Seilaufspulgeschwindigkeit von dem im Motorbetrieb betriebenen, die Seiltrommel antreibenden Antriebsmotor bestimmt wird. Beim Seilaufspulen wird der Antriebsmotor der Seilauswerferrolle in einem Pumpenbetrieb betrieben, in dem der Antriebsmotor von der Seilauswerferrolle angetrieben wird. Im Pumpenbetrieb arbeitet hierbei der von der Seilauswerferrolle angetriebene Antriebsmotor als Bremse. Durch einen Motorbetrieb des die Seiltrommel antreibenden Antriebsmotors, der die Seilaufspulgeschwindigkeit bestimmt, in Verbindung mit dem im Pumpenbetrieb betriebenen und als Bremse arbeitenden Antriebsmotor der Seilauswerferrolle kann beim Seilaufspulen in einfacher Weise eine gewünschte Mindestseilvorspannung in dem Abschnitt des Seils zwischen der Seiltrommel und der Seilauswerferrolle erzeugt werden. Die Seilaufspulgeschwindigkeit kann hierbei durch entsprechende Steuerung der Fördermenge der den Antriebsmotor der Seiltrommel versorgenden Verstellpumpe eingestellt werden.

Gemäß einer vorteilhaften Ausführungsform der Erfindung wird die den Antriebsmotor der Seiltrommel steuernde Steuerwegeventileinrichtung beim Seilaufspulen in Richtung einer Aufspulsteuerstellung betätigt, in der eine Förderleitung der Pumpenvorrichtung mit der ersten Druckmittelleitung verbunden ist und die zweite Druckmittelleitung mit einer Tankleitung verbunden ist, und wird die den Antriebsmotor der Seiltrommel steuernde Steuerwegeventileinrichtung beim Seilabspulen in Richtung einer Abspulsteuerstellung betätigt, in der die Förderleitung der Pumpenvorrichtung mit der zweiten Druckmittelleitung verbunden ist und die erste Druckmittelleitung mit der Tankleitung verbunden ist. In der Aufspulsteuerstellung wird hierdurch zum Seilaufspulen ein Motorbetrieb des die Seiltrommel antreibenden Antriebsmotor in Aufspulrichtung und in der Abspulsteuerstellung zum Seilabspulen ein Motorbetrieb des die Seiltrommel antreibenden Antriebsmotor in Abspulrichtung erzielt.

Gemäß einer vorteilhaften Ausführungsform der Erfindung ist der ersten Anschlussleitung ein Druckbegrenzungsventil zugeordnet, über das beim Seilaufspulen im geöffneten Zustand der von dem im Pumpenbetrieb betriebenen weiteren Antriebsmotor geförderte Volumenstrom zu einem Behälter abgeführt wird. Beim Seilaufspulen und dem Pumpenbetrieb des Antriebsmotors der Seilauswerferrolle bremst somit der von der Seilauswerferrolle angetriebene Antriebsmotor gegenüber dem sich öffnenden Druckbegrenzungsventil ab, das der ersten Anschlussleitung zugeordnet ist. Der im Pumpenbetrieb betriebene Antriebsmotor der Seilauswerferrolle arbeitet somit als Bremse und stellt die Mindestseilvorspannung beim Seilaufspulen auf die Seiltrommel sicher.

Gemäß einer vorteilhaften Ausführungsform der Erfindung ist der zweiten Anschlussleitung ein Nachsaugeventil zugeordnet, über das beim Seilaufspulen im geöffneten Zustand von dem im Pumpenbetrieb betriebenen weiteren Antriebsmotor Druckmittel aus einem Behälter angesaugt wird. Beim Seilaufspulen und dem Pumpenbetrieb des Antriebsmotors der Seilauswerferrolle wird mit dem Nachsaugeventil in einfacher Weise erzielt, dass der im Pumpenbetrieb betriebene Antriebsmotor Druckmittel an der ersten Anschlussleitung über das geöffnete Nachsaugeventil aus dem Behälter ansaugen kann.

Besondere Vorteile ergeben sich, wenn beim Seilaufspulen die den weiteren Antriebsmotor der Seilauswerferrolle steuernde weitere Steuerwegeventileinrichtung in Richtung der Abspulsteuerstellung betätigt wird und zeitlich anschließend die den Antriebsmotor der Seiltrommel steuernde Steuerwegeventileinrichtung in Richtung der Aufspulsteuerstellung betätigt wird. Dadurch wird erzielt, dass der weitere Antriebsmotor der Seilauswerferrolle beim Seilaufspulen das Seil spannt, bevor das Seil durch den Antriebsmotor der Seiltrommel auf die Seiltrommel aufgespult wird.

Besondere Vorteile ergeben sich, wenn beim Seilabspulen die den weiteren Antriebsmotor der Seilauswerferrolle steuernde weitere Steuerwegeventileinrichtung in Richtung der Abspulsteuerstellung betätigt wird und zeitlich anschließend die den Antriebsmotor der Seiltrommel steuernde Steuerwegeventileinrichtung in Richtung der Abspulsteuerstellung betätigt wird. Dadurch wird erzielt, dass der weitere Antriebsmotor der Seilauswerferrolle beim Seilabspulen das Seil spannt, bevor das Seil durch den Antriebsmotor der Seilauswerferrolle und den unterstützenden Antriebsmotor der Seiltrommel von der Seiltrommel abgespult wird.

Sofern eine mit dem Antriebsmotor der Seiltrommel in Wirkverbindung stehende Bremseinrichtung vorgesehen ist, ergeben sich Vorteile, wenn die mit dem Antriebsmotor der Seiltrommel in Wirkverbindung stehende Bremseinrichtung in eine Lösestellung betätigt wird, bevor beim Seilaufspulen die den Antriebsmotor der Seiltrommel steuernde Steuerwegeventileinrichtung in Richtung der Aufspulsteuerstellung betätigt wird oder bevor beim Seilabspulen die den Antriebsmotor der Seiltrommel steuernde Steuerwegeventileinrichtung in Richtung der Abspulsteuerstellung betätigt wird.

Sofern eine die Druckmittelleitungen verbindende Bypassventileinrichtung vorgesehen ist, die in einer die beiden Druckmittelleitungen verbindenden Verbindungsleitung angeordnet ist und die eine Sperrstellung und eine Durchflussstellung aufweist, ergeben sich Vorteile, wenn zeitlich zuerst die Bypassventileinrichtung in die Sperrstellung betätigt wird und zeitlich anschließend die Bremseinrichtung in die Lösestellung beaufschlagt wird. Hierdurch wird eine hohe Funktions- und Betriebssicherheit der Forstseilwinde erzielt, da unsichere Betriebszustände, beispielsweise dass sich die Bypassventileinrichtung noch in der Durchflussstellung befindet wenn die Federspeicherbremse bereits in die Lösestellung betätigt ist, in denen die Seiltrommel bei einer auf das Seil aufgebrachten Kraft unkontrolliert drehen kann, in sicherer und einfacher Weise vermieden werden.

Gemäß einer Weiterbildung der Erfindung ist in einer die erste Druckmittelleitung mit der zweiten Druckmittelleitung verbindenden Leitung ein in Richtung zur ersten Druckmittelleitung öffnendes, federvorgespanntes Sperrventil, insbesondere Rückschlagventil, angeordnet, mit dem beim Seilabspulen der den Antriebsmotor der Seiltrommel antreibende Druck begrenzt wird. Mit einem derartigen, von der zweiten zur ersten Druckmittelleitung öffnenden federvorgespanntem Sperrventil kann in einer einfacher Weise beim Seilabspulen der den Antriebsmotor der Seiltrommel antreibende Druck begrenzt werden und damit die Unterstützungswirkung des Antriebsmotors der Seiltrommel beim Seilabspulen vorgegeben werden.

Gemäß einer vorteilhaften Ausgestaltung der Erfindung ist in einer die erste Druckmittelleitung mit der zweiten Druckmittelleitung verbindenden Verbindungsleitung ein in Richtung zur ersten Druckmittelleitung öffnendes, unvorgespanntes Sperrventil, insbesondere Rückschlagventil, angeordnet, wobei in der Verbindungsleitung ein in Abhängigkeit von dem Druck in der ersten Anschlussleitung gesteuertes Ventil angeordnet ist, das eine Sperrstellung und eine Durchflussstellung aufweist und in Abhängigkeit von dem Druck in der ersten Anschlussleitung in Richtung der Sperrstellung betätigt wird. Mit dem von dem in der ersten Anschlussleitung anstehenden Druck gesteuerten Ventil kann der Staudruck von der zweiten zur ersten Druckmittelleitung zwischen einem niedrigen Staudruck des unvorgespannten Sperrventils und einem höheren Staudruck des federvorgespannten Sperrventils umgeschaltet werden. Bei einem Anstieg des Druckes in der ersten Anschlussleitung kann hierdurch auf den höheren Staudruck umgeschaltet werden, so dass bei entsprechender Ansteuerung der Steuerwegeventileinrichtung die Seiltrommel von dem Antriebsmotor derart angetrieben wird, dass die von dem weiteren Antriebsmotor angetriebene Seilauswerferrolle beim Abspulen des Seils von der in Abspulrichtung angetriebenen Seiltrommel unterstützt wird.

Die Erfindung betrifft weiterhin eine Forstseilwinde, die eine von einem Antriebsmotor angetriebene Seiltrommel aufweist, auf der ein Seil aufgespult ist, und eine von einem weiteren Antriebsmotor angetriebene Seilauswerferrolle für das Seil aufweist, wobei das Seil von der Seiltrommel zur Seilauswerferrolle geführt ist und an der Seilauswerferrolle umgelenkt ist.

Die Aufgabe wird bei der Forstseilwinde erfindungsgemäß dadurch gelöst, dass eine den Betrieb des Antriebsmotors der Seiltrommel und den Betrieb des weiteren Antriebsmotors der Seilauswerferrolle steuernde elektronische Steuereinrichtung vorgesehen ist, die ein Verfahren nach einem der vorangegangenen Ansprüche ausführt und dass der Antriebsmotor der Seiltrommel als Hydraulikmotor ausgebildet ist, der mittels einer ersten Druckmittelleitung und einer zweiten Druckmittelleitung an eine den Antriebsmotor steuernde Steuerwegeventileinrichtung angeschlossen ist und dass der weitere Antriebsmotor der Seilauswerferrolle als Hydraulikmotor ausgebildet ist, der mittels einer ersten Anschlussleitung und einer zweiten Anschlussleitung an eine den weiteren Antriebsmotor steuernde Steuerwegeventileinrichtung angeschlossen ist, wobei die Steuerwegeventileinrichtung und die weitere Steuerwegeventileinrichtung von einer in der Fördermenge verstellbaren Pumpenvorrichtung mit Druckmittel versorgt sind, wobei die den Antriebsmotor der Seiltrommel steuernde Steuerwegeventileinrichtung und die den weiteren Antriebsmotor der Seilauswerferrolle steuernde Steuerwegeventileinrichtung von der elektronischen Steuereinrichtung angesteuert sind, derart, dass die den weiteren, als Hydraulikmotor ausgebildeten Antriebsmotor der Seilauswerferrolle steuernde weitere Steuerwegeventileinrichtung beim Seilaufspulen und beim Seilabspulen in Richtung einer Abspulsteuerstellung betätigt wird, in der eine Förderleitung der Pumpenvorrichtung mit der ersten Anschlussleitung verbunden ist und die zweite Anschlussleitung mit einer Tankleitung verbunden ist.

Der Antriebsmotor der Seiltrommel ist als Hydraulikmotor ausgebildet, der mittels einer ersten Druckmittelleitung und einer zweiten Druckmittelleitung an eine den Antriebsmotor steuernde Steuerwegeventileinrichtung angeschlossen ist und der weitere Antriebsmotor der Seilauswerferrolle ist als Hydraulikmotor ausgebildet, der mittels einer ersten Anschlussleitung und einer zweiten Anschlussleitung an eine den weiteren Antriebsmotor steuernde Steuerwegeventileinrichtung angeschlossen ist, wobei die den Antriebsmotor der Seiltrommel steuernde Steuerwegeventileinrichtung und die den weiteren Antriebsmotor der Seilauswerferrolle steuernde Steuerwegeventileinrichtung von der elektronischen Steuereinrichtung angesteuert sind. Mit einer die Steuerwegeventileinrichtungen des Antriebsmotors der Seiltrommel und den Antriebsmotor der Seilauswerferrolle ansteuernden elektronischen Steuereinrichtung kann auf einfache Weise der Antriebsmotor der Seiltrommel und der weitere Antriebsmotor der Seilauswerferrolle derart betrieben werden, dass beim Seilabspulen des Seils von der Seiltrommel und beim Seilaufspulen des Seils auf die Seiltrommel in dem Abschnitt des Seils zwischen der Seiltrommel und der Seilauswerferrolle die Mindestseilvorspannung, insbesondere eine konstante Mindestseilvorspannung, in dem Abschnitt des Seils zwischen der Seiltrommel und der Seilauswerferrolle erzeugt wird.

Weitere Vorteile und Einzelheiten der Erfindung werden anhand der in den schematischen Figuren dargestellten Ausführungsbeispiele näher erläutert. Hierbei zeigt
- Figur 1: eine erfindungsgemäße Forstseilwinde in einer Prinzipdarstellung,
- Figur 2: eine erste Ausführungsform eines Hydraulikschaltplans einer erfindungsgemäßen Forstseilwinde und
- Figur 3: eine Weiterbildung der Figur 2.

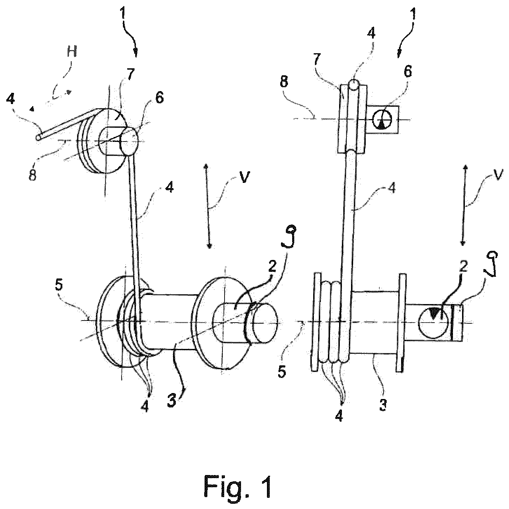

In der Figur 1 ist eine erfindungsgemäße Forstseilwinde 1 in einer schematischen Darstellung gezeigt. Die linke Darstellung der Figur 1 zeigt eine perspektivische Darstellung und die rechte Darstellung eine Vorderansicht der erfindungsgemäßen Forstseilwinde 1.

Die Forstseilwinde 1 weist eine von einem Antriebsmotor 2 angetriebene Seiltrommel 3 auf, auf der ein Seil 4, beispielsweise ein Stahlseil oder ein Kunststoffseil, aufgespult ist. Die Seiltrommel 3 ist um eine Drehachse 5 drehbar angeordnet und von dem Antriebsmotor 2 angetrieben, der als Hydraulikmotor ausgebildet ist.

Die Forstseilwinde 1 weist im dargestellten Ausführungsbeispiel weiterhin eine von einem weiteren Antriebsmotor 6 angetriebene Seilauswerferrolle 7 für das Seil 4 auf. Die Seilauswerferrolle 7 ist um eine Drehachse 8 drehbar angeordnet und von dem Antriebsmotor 6 angetrieben, der als Hydraulikmotor ausgebildet ist.

Das Seil 4 ist von der Seiltrommel 3 im dargestellten Ausführungsbeispiel in vertikaler Richtung V zu der Seilauswerferrolle 7 geführt, über die Seilauswerferrolle 7 geführt und an der Seilauswerferrolle 7 derart umgelenkt, dass das Seil 4 von der Seilauswerferrolle 7 in horizontaler Richtung H weggeführt ist.

Das Seil 4 ist mittels einer - in der Figur 1 aus Übersichtlichkeitsgründen nicht näher dargestellten - Anpressvorrichtung auf die Seilauswerferrolle 7 angepresst.

Die Seiltrommel 3 bzw. der Antriebsmotor 2 kann weiterhin mit einer Bremseinrichtung 9 in Wirkverbindung stehen.

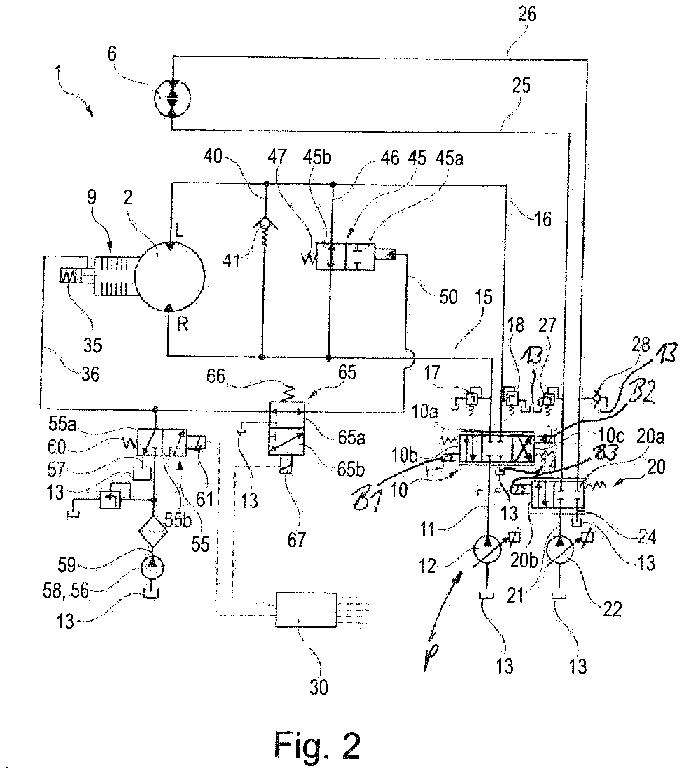

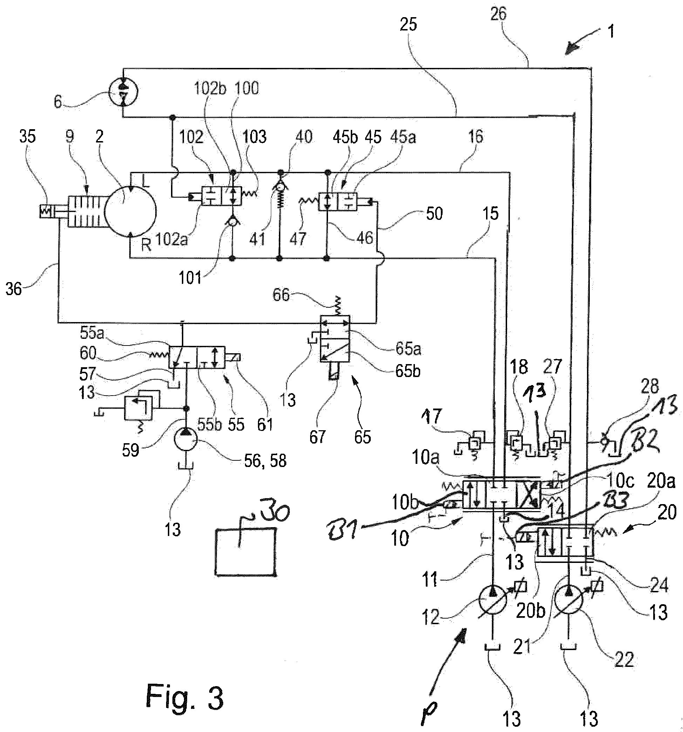

In den Figuren 2 und 3 sind Hydraulikschaltpläne der erfindungsgemäßen Forstseilwinde 1 dargestellt, wobei gleiche Bauteile mit gleichen Bezugsziffern versehen sind.

In den Figuren 2 und 3 ist der als Hydraulikmotor ausgebildete Antriebsmotor 2 der Seiltrommel 3 mittels einer Steuerwegeventileinrichtung 10 steuerbar. Die Steuerwegeventileinrichtung 10 und somit der Antriebsmotor 2 ist von einer in der Fördermenge verstellbaren Pumpenvorrichtung P mit Druckmittel versorgt. Die Pumpenvorrichtung P weist eine erste in der Fördermenge verstellbare Verstellpumpe 12 auf, die die Steuerwegeventileinrichtung 10 und somit den Antriebsmotor 2 mit Druckmittel versorgt. Die Steuerwegeventileinrichtung 10 ist an eine Förderleitung 11 der ersten Verstellpumpe 12 angeschlossen, die Druckmittel aus einem Behälter 13 ansaugt, an eine zu dem Behälter 13 geführte Tankleitung 14 angeschlossen, sowie an eine mit einem Anschluss R des Antriebsmotors 2 verbundenen erste Druckmittelleitung 15 sowie an eine mit einem Anschluss L des Antriebsmotors 2 verbundenen zweite Druckmittelleitung 16 angeschlossen. An die erste Druckmittelleitung 15 ist ein einen maximalen Arbeitsdruck in der Druckmittelleitung 15 absicherndes Druckbegrenzungsventil 17 angeschlossen. Entsprechend ist an die zweite Druckmittelleitung 16 ein einen maximalen Arbeitsdruck in der Druckmittelleitung 16 absicherndes Druckbegrenzungsventil 18 angeschlossen.

Die Steuerwegeventileinrichtung 10 ist als Dreistellungsventil ausgebildet und weist eine Neutralstellung 10a auf, in der die Förderleitung 11, die Tankleitung 14 und die Druckmittelleitungen 15, 16 abgesperrt sind. Die Steuerwegeventileinrichtung 10 weist eine Aufspulsteuerstellung 10b auf, in der die Förderleitung 11 mit der ersten Druckmittelleitung 15 verbunden ist und die zweite Druckmittelleitung 16 mit der Tankleitung 14 verbunden ist. In der Aufspulsteuerstellung 10b wird der Antriebsmotor 2 in Aufspulrichtung betrieben, in der das Seil 4 auf die Seiltrommel 3 aufgespult wird. Die Steuerwegeventileinrichtung 10 weist eine Abspulsteuerstellung 10c auf, in der die Förderleitung 11 mit der zweiten Druckmittelleitung 16 verbunden ist und die erste Druckmittelleitung 15 mit der Tankleitung 14 verbunden ist. In der zweiten Steuerstellung 10c wird der Antriebsmotor 2 in Abspulrichtung betrieben, in der das Seil 4 von der Seiltrommel 3 abgespult wird.

Die Steuerwegeventileinrichtung 10 ist von Federn in die Neutralstellung 10a beaufschlagt und mittels elektrisch angesteuerter Betätigungseinrichtungen B1, B2, beispielsweise Proportionalmagneten oder elektrisch angesteuerten Druckminderventilen, in Richtung der Aufspulsteuerstellung 10b und in Richtung der Abspulsteuerstellung 10c betätigbar. Die Betätigungseinrichtungen B1, B2 stehen zur Ansteuerung mit einer elektronischen Steuereinrichtung 30 in Verbindung.

Der als Hydraulikmotor ausgebildete weitere Antriebsmotor 6 der Seilauswerferrolle 7 ist mittels einer weiteren Steuerwegeventileinrichtung 20 steuerbar. Die Steuerwegeventileinrichtung 20 und somit der Antriebsmotor 6 ist von der in der Fördermenge verstellbaren Pumpenvorrichtung P mit Druckmittel versorgt. Die Pumpenvorrichtung P weist eine zweite in der Fördermenge verstellbare Verstellpumpe 22 auf, die die Steuerwegeventileinrichtung 20 und somit den Antriebsmotor 6 mit Druckmittel versorgt. Die Steuerwegeventileinrichtung 20 ist an eine Förderleitung 21 der zweiten Verstellpumpe 22 angeschlossen, die Druckmittel aus dem Behälter 13 ansaugt, an eine zu dem Behälter 13 geführte Tankleitung 24 angeschlossen, sowie an eine mit einem ersten Anschluss des Antriebsmotors 6 verbundenen erste Anschlussleitung 25 sowie an eine mit einem zweiten Anschluss des Antriebsmotors 6 verbundenen zweite Anschlussleitung 26 angeschlossen.

Die erste Verstellpumpe 12 und die zweite Verstellpumpe 22 sind von einer nicht näher dargestellten Antriebsmaschine, beispielsweise einem als Dieselmotor ausgebildeten Verbrennungsmotor, angetrieben.

An die erste Anschlussleitung 25 ist ein einen maximalen Arbeitsdruck in der Anschlussleitung 25 absicherndes Druckbegrenzungsventil 27 angeschlossen, das mit dem Behälter 13 in Verbindung steht.

An die zweite Anschlussleitung 26 ist ein Nachsaugeventil 28 angeschlossen, das mit dem Behälter 13 in Verbindung steht und bei Bedarf in Richtung zur zweiten Anschlussleitung 26 öffnet.

Die Steuerwegeventileinrichtung 20 ist als Zweistellungsventil ausgebildet und weist eine Sperrstellung 20a auf, in der die Förderleitung 21, die Tankleitung 24 und die Anschlussleitungen 25, 26 abgesperrt sind. Die Steuerwegeventileinrichtung 20 weist eine Abspulsteuerstellung 20b auf, in der die Förderleitung 21 mit der ersten Anschlussleitung 25 verbunden ist und die zweite Anschlussleitung 26 mit der Tankleitung 24 verbunden ist.

Die Steuerwegeventileinrichtung 20 ist von einer Feder in die Sperrstellung 20a beaufschlagt und mittels einer elektrisch angesteuerten Betätigungseinrichtung B3, beispielsweise eines Proportionalmagneten oder eines elektrisch angesteuerten Druckminderventils, in Richtung der Abspulsteuerstellung 20b betätigbar. Die Betätigungseinrichtung B3 steht zur Ansteuerung mit der elektronischen Steuereinrichtung 30 in Verbindung.

Die Steuerwegeventile 10, 20 sind somit mittels der elektronischen Steuereinrichtung 30 in die Steuerstellungen 10b, 10c, 20b ansteuerbar.

Die Verstellpumpen 12, 22 sind von der der elektronischen Steuereinrichtung 30 in der Fördermenge verstellbar.

Die mit der Seiltrommel 3 bzw. dem Antriebsmotor 2 in Wirkverbindung stehende Bremseinrichtung 9 ist als Federspeicherbremse ausgebildet, die von einer Federeinrichtung 35 in Richtung einer Bremsstellung und von einem in einer Bremslösedruckleitung 36 anstehenden hydraulischen Bremslösedruck in Richtung einer Lösestellung beaufschlagt ist.

In einer die erste Druckmittelleitung 15 mit der zweiten Druckmittelleitung 16 verbindenden Leitung 40 ist ein in Richtung zur ersten Druckmittelleitung 15 öffnendes, federvorgespanntes Sperrventil 41 angeordnet sein. Das Sperrventil 41 ist im dargestellten Ausführungsbeispiel als Rückschlagventil ausgebildet, das von einer Feder in eine Sperrstellung beaufschlagt ist.

Weiterhin kann eine die beiden Druckmittelleitungen 15, 16 verbindende Bypassventileinrichtung 45 vorgesehen sein, die in einer die beiden Druckmittelleitungen 15, 16 verbindenden Verbindungsleitung 46 angeordnet ist. Die Bypassventileinrichtung 45 ist in den dargestellten Ausführungsbeispielen als Schaltventil ausgebildet, das eine Sperrstellung 45a und eine Durchflussstellung 45b aufweist.

Die Bypassventileinrichtung 45 ist von einem in einer Steuerleitung 50 anstehenden hydraulischen Steuerdruck in Richtung der Sperrstellung 45a betätigt. Die Bypassventileinrichtung 45 ist von einer Federeinrichtung 47 in Richtung der Durchflussstellung 45b betätigt.

Die Federspeicherbremse 9 und die Bypassventileinrichtung 45 sind gemeinsam von einem Steuerventil 55 angesteuert.

Das Steuerventil 55 ist in den dargestellten Ausführungsbeispielen als Dreianschluss-Zweistellungsventil ausgebildet, das an einem ersten Anschluss an die Steuerleitung 50 und die Bremslösedruckleitung 36 angeschlossen ist, an einem zweiten Anschluss an eine Steuerdruckquelle 56 angeschlossen ist und an einem dritten Anschluss an eine zu dem Behälter 13 geführte Tankleitung 57 angeschlossen ist. Die Steuerdruckquelle 56 ist im dargestellten Ausführungsbeispiel als Speisepumpe 58 ausgebildet, die Druckmittel aus dem Behälter 13 ansaugt und in eine an den zweiten Anschluss des Steuerventils 55 angeschlossenen Förderleitung 59 fördert.

Das Steuerventil 55 weist eine erste Steuerstellung 55a auf, in der die Bremslösedruckleitung 36 und die Steuerleitung 50 mit dem Behälter 13 verbunden sind, und eine zweite Steuerstellung 55b auf, in der die Bremslösedruckleitung 36 und die Steuerleitung 50 mit der Förderleitung 59 der Speisepumpe 58 und somit mit der Steuerdruckquelle 56 verbunden sind. In der ersten Steuerstellung 55a ist weiterhin die Förderleitung 59 abgesperrt. In der zweiten Steuerstellung 55b ist weiterhin die Tankleitung 57 abgesperrt.

Das Steuerventil 55 entlastet somit in der ersten Steuerstellung 55a die Bremslösedruckleitung 36 und die Steuerleitung 50 zum Behälter 13, so dass in der ersten Steuerstellung 55a die Federspeicherbremse 9 von der Federeinrichtung 35 in die Bremsstellung beaufschlagt ist und die Bypassventileinrichtung 45 von der Federeinrichtung 47 in die Durchflussstellung 45b beaufschlagt ist. Das Steuerventil 55 verbindet in der zweiten Steuerstellung 55b die Bremslösedruckleitung 36 und die Steuerleitung 50 mit der Förderleitung 59 der Speisepumpe 58, sodass in der zweiten Steuerstellung 55b die Federspeicherbremse 9 von dem von der Speisepumpe 58 bereitgestellten Förderdruck entgegen der Kraft der Federeinrichtung 35 in die Lösestellung beaufschlagt ist und die Bypassventileinrichtung 45 von dem von der Speisepumpe 58 bereitgestellten Förderdruck entgegen der Kraft der Federeinrichtung 47 in die Sperrstellung 45a beaufschlagt ist.

Das Steuerventil 55 ist von einer Feder 60 in Richtung der ersten Steuerstellung 55a und von einer elektrischen Betätigungseinrichtung 61, beispielsweise einem Schaltmagnet, in Richtung der zweiten Steuerstellung 55b betätigbar. Die Betätigungseinrichtung 61 steht zur Ansteuerung mit der elektronischen Steuereinrichtung 30 in Verbindung.

In der Steuerleitung 50 kann weiterhin ein Freilaufventil 65 angeordnet sein, das in einer ersten Steuerstellung 65a die Steuerleitung 50 öffnet und in einer zweiten Steuerstellung 65b einen mit der Bypassventileinrichtung 45 verbundenen Abschnitt der Steuerleitung 50 zu dem Behälter 13 entlastet.

Das Freilaufventil 65 ist von einer Feder 66 in Richtung der ersten Steuerstellung 65a betätigbar und von einer elektrischen Betätigungseinrichtung 67, beispielsweise einem Schaltmagnet, in Richtung der zweiten Steuerstellung 65b betätigbar. Die Betätigungseinrichtung 67 steht zur Ansteuerung mit der elektronischen Steuereinrichtung 30 in Verbindung.

Bei der erfindungsgemäßen Forstseilwinde 1 ist die elektronische Steuereinrichtung 30 derart ausgebildet, dass der Antriebsmotor 2 der Seiltrommel 3 und der weitere Antriebsmotor 6 der Seilauswerferrolle 7 derart betrieben werden, dass beim Seilabspulen des Seils 4 von der Seiltrommel 3 und beim Seilaufspulen des Seils 4 auf die Seiltrommel 3 in dem Abschnitt des Seils 4 zwischen der Seiltrommel 3 und der Seilauswerferrolle 7 eine Mindestseilvorspannung, insbesondere eine konstante Mindestseilvorspannung, erzeugt wird. Dadurch kann ein sicheres, geordnetes und seilschonendes Abspulen des Seils 4 von der Seiltrommel 3 beim Seilabspulen sowie ein sicheres, geordnetes und seilschonendes Aufspulen des Seils 4 auf die Seiltrommel 3 beim Seilaufspulen sichergestellt werden.

Von der elektronischen Steuereinrichtung 30 werden hierzu die den Antriebsmotor 2 der Seiltrommel 3 steuernde Steuerwegeventileinrichtung 10 und die den weiteren Antriebsmotor 6 der Seilauswerferrolle 7 steuernde weitere Steuerwegeventileinrichtung 20 derart betrieben, dass beim Seilabspulen des Seils 4 von der Seiltrommel 3 und beim Seilaufspulen des Seils 4 auf die Seiltrommel 3 in dem Abschnitt des Seils 4 zwischen der Seiltrommel 3 und der Seilauswerferrolle 7 die Mindestseilvorspannung, insbesondere eine konstante Mindestseilvorspannung, erzeugt wird.

Zum Seilabspulen des Seils 4 von der Seiltrommel 3 werden von der elektronischen Steuereinrichtung 30 der Antriebsmotor 2 der Seiltrommel 3 und der weitere Antriebsmotor 6 der Seilauswerferrolle 7 derart betrieben, dass beim Seilabspulen des Seils 4 von der Seiltrommel 3 der die Seiltrommel 3 antreibende Antriebsmotor 2 in einem Motorbetrieb betrieben wird und der die Seilauswerferrolle 7 antreibende weitere Antriebsmotor 6 in einem Motorbetrieb betrieben wird, wobei die Seilabspulgeschwindigkeit von dem im Motorbetrieb betriebenen, die Seilauswerferrolle 7 antreibenden weiteren Antriebsmotor 6 bestimmt wird.

Von der elektronischen Steuereinrichtung 30 wird hierzu die den Antriebsmotor 6 der Seilauswerferrolle 7 steuernde Steuerwegeventileinrichtung 20 in Richtung der Abspulsteuerstellung 20b betätigt, so dass die Anschlussleitung 25 mit der Förderleitung 21 der Verstellpumpe 22 verbunden ist und der Antriebsmotor 6 von dem in der ersten Anschlussleitung 25, die mit der Förderleitung 21 der Verstellpumpe 22 verbunden ist, zuströmenden Volumenstrom in Abspulrichtung angetrieben ist und in einem Motorbetrieb in Abspulrichtung betrieben wird. Von der elektronischen Steuereinrichtung 30 wird weiterhin das Steuerventil 55 in die zweite Steuerstellung 55b betätigt, um die die Federspeicherbremse 9 von dem von der Speisepumpe 58 bereitgestellten Förderdruck entgegen der Kraft der Federeinrichtung 35 in die Lösestellung zu beaufschlagen und die Bypassventileinrichtung 45 von dem von der Speisepumpe 58 bereitgestellten Förderdruck entgegen der Kraft der Federeinrichtung 47 in die Sperrstellung 45a zu beaufschlagen. Die Feder 47 der Bypassventileinrichtung 45 und die Feder 35 der Bremseinrichtung 9 sind hierbei derart ausgeführt, dass von dem von der Speisepumpe 58 bereitgestellten Förderdruck zeitlich zuerst die Bypassventileinrichtung 45 in die Sperrstellung 45a betätigt wird und anschließend die Bremseinrichtung 9 in die Lösestellung betätigt wird. Zeitlich anschließend an die Betätigung der Steuerwegeventileinrichtung 20 in Richtung der Abspulsteuerstellung 20b wird von der Steuereinrichtung 30 die den Antriebsmotor 2 der Seiltrommel 3 steuernde Steuerwegeventileinrichtung 10 in Richtung der Abspulsteuerstellung 10c betätigt, in der die Förderleitung 11 der Verstellpumpe 12 mit der zweiten Druckmittelleitung 16 verbunden ist und die erste Druckmittelleitung 15 mit der Tankleitung 14 verbunden ist, wobei der Antriebsmotor 2 von dem in der zweiten Druckmittelleitung 16, die mit der Förderleitung 11 der Verstellpumpe 12 verbunden ist, zuströmenden Volumenstrom in Abspulrichtung angetrieben ist und in einem Motorbetrieb in Abspulrichtung betrieben wird. Der den Antriebsmotor 2 beim Seilabspulen antreibende Druck ist hierbei von dem federvorgespanntes Sperrventil 41 begrenzt.

Von der elektronischen Steuereinrichtung 30 wird beim Seilabspulen des Seils 4 von der Seiltrommel 3 die Fördermenge der Verstellpumpe 22 entsprechend einer vorgegebenen Seilabspulgeschwindigkeit gesteuert, so dass die Seilabspulgeschwindigkeit von dem im Motorbetrieb betriebenen, die Seilauswerferrolle 7 antreibenden weiteren Antriebsmotor 6 bestimmt wird. Der im Motorbetrieb betriebene Antriebsmotor 2 der Seiltrommel 3 hat beim Seilabspulen lediglich eine unterstützende Wirkung und reduziert das von dem Antriebsmotor 6 aufzubringende Drehmoment beim Seilabspulen des Seils 4 von der Seiltrommel 3, indem der Antriebsmotor 2 beispielsweise die Lagerreibung in einer Drehlagerung der Seiltrommel 3 aufbringt. Dadurch kann die gewünschte Mindestseilvorspannung in dem Abschnitt des Seils 4 zwischen der Seilauswerferrolle 7 und der Seiltrommel 4 beim Seilabspulen sichergestellt werden.

Durch die Betätigung der Steuerwegeventileinrichtung 20 in Richtung der Abspulsteuerstellung 20b zeitlich vor der Ansteuerung der Steuerwegeventileinrichtung 10 in Richtung der Abspulsteuerstellung 10c beim Seilabspulen des Seils 4 von der Seiltrommel 3 wird erzielt, dass der im Motorbetrieb in Abspulrichtung betriebene Antriebsmotor 6 den Abschnitt des Seils 4 zwischen der Seilauswerferrolle 7 und der Seiltrommel 3 spannt, bevor das Seil 4 von der Seiltrommel 3 abgespult wird.

Zum Seilaufspulen des Seils 4 auf die Seiltrommel 3 werden von der elektronischen Steuereinrichtung 30 der Antriebsmotor 2 der Seiltrommel 3 und der weitere Antriebsmotor 6 der Seilauswerferrolle 7 derart betrieben, dass beim Seilaufspulen des Seils 4 auf die Seiltrommel 3 der die Seiltrommel 3 antreibende Antriebsmotor 2 in einem Motorbetrieb betrieben wird und der die Seilauswerferrolle 7 antreibende weitere Antriebsmotor 6 in einem Pumpenbetrieb betrieben wird, in dem der weitere Antriebsmotor 6 von der Seilauswerferrolle 7 angetrieben wird, wobei die Seilaufspulgeschwindigkeit von dem im Motorbetrieb betriebenen, die Seiltrommel 4 antreibenden Antriebsmotor 2 bestimmt wird.

Von der elektronischen Steuereinrichtung 30 wird hierzu die den Antriebsmotor 6 der Seilauswerferrolle 7 steuernde Steuerwegeventileinrichtung 20 in Richtung der Abspulsteuerstellung 20b betätigt, so dass die Anschlussleitung 25 mit der Förderleitung 21 der Verstellpumpe 22 verbunden wird und die Anschlussleitung 26 mit der Tankleitung 24 verbunden wird. Von der elektronischen Steuereinrichtung 30 wird zeitlich anschließend weiterhin das Steuerventil 55 in die zweite Steuerstellung 55b betätigt, um die die Federspeicherbremse 9 von dem von der Speisepumpe 58 bereitgestellten Förderdruck entgegen der Kraft der Federeinrichtung 35 in die Lösestellung zu beaufschlagen und die Bypassventileinrichtung 45 von dem von der Speisepumpe 58 bereitgestellten Förderdruck entgegen der Kraft der Federeinrichtung 47 in die Sperrstellung 45a zu beaufschlagen. Die Feder 47 der Bypassventileinrichtung 45 und die Feder 35 der Bremseinrichtung 9 sind hierbei derart ausgeführt, dass von dem von der Speisepumpe 58 bereitgestellten Förderdruck zeitlich zuerst die Bypassventileinrichtung 45 in die Sperrstellung 45a betätigt wird und anschließend die Bremseinrichtung 9 in die Lösestellung betätigt wird. Zeitlich anschließend an die Betätigung der Steuerwegeventileinrichtung 20 in Richtung der Abspulsteuerstellung 20b und zeitlich anschließend an die Betätigung des Steuerventils 55 in die zweite Steuerstellung 55b zum Lösen der Federspeicherbremse 9 wird von der Steuereinrichtung 30 die den Antriebsmotor 2 der Seiltrommel 3 steuernde Steuerwegeventileinrichtung 10 in Richtung der Aufspulsteuerstellung 10b betätigt, in der die Förderleitung 11 der Verstellpumpe 12 mit der ersten Druckmittelleitung 15 verbunden ist und die zweite Druckmittelleitung 16 mit der Tankleitung 14 verbunden ist, wobei der Antriebsmotor 2 von dem in der ersten Druckmittelleitung 15, die mit der Förderleitung 11 der Verstellpumpe 12 verbunden ist, zuströmenden Volumenstrom in Aufspulrichtung angetrieben ist und in einem Motorbetrieb in Aufspulrichtung betrieben wird.

Von der elektronischen Steuereinrichtung 30 wird beim Seilaufspulen des Seils 4 auf die Seiltrommel 3 die Fördermenge der Verstellpumpe 12 entsprechend einer vorgegebenen Seilaufspulgeschwindigeit gesteuert, so dass die Seilaufspulgeschwindigkeit von dem im Motorbetrieb betriebenen, die Seiltrommel 3 antreibenden Antriebsmotor 2 bestimmt wird.

Durch die Betätigung der Steuerwegeventileinrichtung 20 in Richtung der Abspulsteuerstellung 20b zeitlich vor der Ansteuerung der Steuerwegeventileinrichtung 10 in Richtung der Aufspulsteuerstellung 10b beim Seilaufspulen des Seils 4 auf die Seiltrommel 3 wird erzielt, dass der Antriebsmotor 6 kurzzeitig, d.h. solange die Steuerwegeventileinrichtung 10 noch nicht in die in Richtung der Aufspulsteuerstellung 10b betätigt ist und die Federspeicherbremse 9 noch in die Bremsstellung betätigt ist, von dem Förderstrom der Verstellpumpe 22 in einem Motorbetrieb in Abspulrichtung betrieben wird, so dass der Antriebsmotor 6 den Abschnitt des Seils 4 zwischen der Seilauswerferrolle 7 und der Seiltrommel 3 spannt. Sobald beim Seilaufspulen des Seils 4 auf die Seiltrommel 3 die Federspeicherbremse 9 in die Lösestellung betätigt wird und die Steuerwegeventileinrichtung 10 in Richtung der Aufspulsteuerstellung 10b betätigt wird und dadurch der die Seiltrommel 4 antreibende Antriebsmotor 2 in einem Motorbetrieb in Aufspulrichtung betrieben wird, wird der Antriebsmotor 6 von der Seilauswerferrolle 7 und dem über die Seilauswerferrolle 7 geführten Seil 4 in Aufspulrichtung gedreht und angetrieben und dadurch in einem Pumpenbetrieb in Aufspulrichtung betrieben.

Der im Pumpenbetrieb und in Aufspulrichtung betriebene Antriebsmotor 6 saugt hierbei in der Anschlussleitung 26 bei in der Abspulsteuerstellung 20b befindlichem Steuerwegeventil 20 Druckmittel über die Tankleitung 24 aus dem Behälter 13 an. Zusätzlich kann der im Pumpenbetrieb betriebene Antriebsmotor 6 über das sich öffnende Nachsaugeventil 28 an der Anschlussleitung 26 Druckmittel aus dem Behälter 13 ansaugen. Der im Pumpenbetrieb betriebene Antriebsmotor 6 fördert das Druckmittel in die Anschlussleitung 25, wobei der von dem im Pumpenbetrieb des Antriebsmotors 6 geförderte Volumenstrom über das sich öffnende Druckbegrenzungsventil 27 an der Anschlussleitung 25 zum Behälter 13 abgeführt wird. Der Öffnungsdruck des Druckbegrenzungsventils 27 stellt somit einen Bremsdruck dar und der im Pumpenbetrieb betriebene Antriebsmotor 6 wirkt beim Seilaufspulen als Bremse und stellt die Mindestseilvorspannung in dem Abschnitt des Seils 4 zwischen der Seilauswerferrolle 7 und der Seiltrommel 4 beim Seilaufspulen sicher.

In der Figur 3 ist eine Variante der Figur 2 dargestellt, bei der in einer die erste Druckmittelleitung 15 mit der zweiten Druckmittelleitung 16 verbindenden Verbindungsleitung 100 ein in Richtung zur ersten Druckmittelleitung 15 öffnendes, unvorgespanntes Sperrventil 101, beispielsweise ein Rückschlagventil, angeordnet ist.

In der Verbindungsleitung 100 ist weiterhin ein in Abhängigkeit von dem Druck in der ersten Anschlussleitung 25 gesteuertes Ventil 102 angeordnet, das eine Sperrstellung 102a und eine Durchflussstellung 102b aufweist. Das Ventil 102 ist von einer Feder 103 in Richtung der Durchflussstellung 102b und in Abhängigkeit von dem Druck in der ersten Anschlussleitung 25 in Richtung der Sperrstellung 102a betätigt.

In der Figur 3 sind somit zwei Sperrventile 41, 101 vorgesehen, die die zweite Druckmittelleitung 16 mit der ersten Druckmittelleitung 15 verbinden, wobei das federbelastete Sperrventil 41 einen höheren Staudruck von der zweiten Druckmitteleitung 16 zur ersten Druckmittelleitung 15 erzeugt wie das unbelastete Sperrventil 101. Mit dem vom Druck und somit der Belastung des Antriebsmotors 6 der Seilauswerferrolle 7 gesteuerten Ventil 102 kann hierbei der Staudruck von der zweiten Druckmitteleitung 16 zur ersten Druckmittelleitung 15 zwischen dem niedrigen Druck des Sperrventils 101 auf den erhöhten Druck des Sperrventils 41 umgeschaltet werden.

Die Figur 3 ermöglicht es, das Abspulen des Seils 4 von der Seiltrommel 3 durch den Antriebsmotor 6 der Seilauswerferrolle 7 mit dem Antriebsmotor 2 in Abhängigkeit von der Belastung des Antriebsmotors 6 zu unterstützen.

Beim Seilabspulen, wobei die Steuerwegeventileinrichtung 20 in Richtung der Abspulsteuerstellung 20b betätigt ist, wird der Antriebsmotor 6 der Seilauswerferrolle 7 von dem in der ersten Anschlussleitung 25, die mit der Förderleitung 21 der Hydraulikpumpe 22 verbunden ist, zuströmenden Volumenstrom in Abspulrichtung angetrieben. Sofern zum Antrieb des Antriebsmotors 6 der Seilauswerferrolle 7 ein Druck in der ersten Anschlussleitung 25 ausreicht, der geringer als die Vorspannung der Feder 103 des Ventils 102 ist, die beispielswiese 100bar beträgt, ist das Ventil 102 von der Feder 103 in die Durchflussstellung 102b beaufschlagt. Der in der Druckmittelleitung 16, die in der Abspulsteuerstellung 10c der Steuerwegeventileinrichtung 10 mit der Förderleitung 11 der Hydraulikpumpe 12 verbunden ist, zuströmende Volumenstrom kann somit über das sich öffnende Sperrventil 101 bei geringem Staudruck in die Druckmittelleitung 15 abströmen, die in der Steuerstellung 10c der Steuerwegeventileinrichtung 10 mit dem Behälter 13 verbunden ist, so dass der Antriebsmotor 2 der Seiltrommel 3 frei mitdrehen kann und das Seil 4 mittels der vom Antriebsmotor 6 angetriebenen Seilauswerferrolle 7 von der Seiltrommel 3 abgespult wird. Steigt die Belastung des Antriebsmotors 6 der Seilauswerferrolle 7 beim Seilabspulen an und der Antriebsmotors 6 der Seilauswerferrolle 7 benötigt zum Antrieb einen Druck in der ersten Anschlussleitung 25, der höher als die Vorspannung der Feder 103 des Ventils 102 ist, wird das Ventil 102 von dem in der ersten Anschlussleitung 25 anstehenden Druck in die Sperrstellung 102a beaufschlagt. Von dem Sperrventil 101 wird somit auf das auf einen höheren Staudruck eingestellte Sperrventil 41 umgeschaltet, wodurch der Antriebsmotor 2 der Seiltrommel 3 mit dem an dem Sperrventil 41 eingestellten Staudruck in Abspulrichtung mitangetrieben wird. Die von dem Antriebsmotor 2 angetriebene Seiltrommel unterstützt somit den Antriebsmotor 6 der Seilauswerferrolle 7 beim Abspulen des Seils 4 von der Seiltrommel 3 in Abhängigkeit von der Belastung des Antriebsmotors 6 der Seilauswerferrolle 7.

## Patentansprüche

1. Verfahren zum Betrieb einer Forstseilwinde (1), die eine von einem Antriebsmotor (2) angetriebene Seiltrommel (3) aufweist, auf der ein Seil (4) aufgespult ist, und eine von einem weiteren Antriebsmotor (6) angetriebene Seilauswerferrolle (7) für das Seil (4) aufweist, wobei das Seil (4) von der Seiltrommel (3) zur Seilauswerferrolle (7) geführt ist und an der Seilauswerferrolle (7) umgelenkt ist, wobei der Antriebsmotor (2) der Seiltrommel (3) und der weitere Antriebsmotor (6) der Seilauswerferrolle (7) derart betrieben werden, dass beim Seilabspulen des Seils (4) von der Seiltrommel (3) und beim Seilaufspulen des Seils (4) auf die Seiltrommel (3) in dem Abschnitt des Seils (4) zwischen der Seiltrommel (3) und der Seilauswerferrolle (7) eine Mindestseilvorspannung, insbesondere eine konstante Mindestseilvorspannung, erzeugt wird, **dadurch gekennzeichnet, dass** der Antriebsmotor (2) der Seiltrommel (3) als Hydraulikmotor ausgebildet ist, der mittels einer ersten Druckmittelleitung (15) und einer zweiten Druckmittelleitung (16) an eine den Antriebsmotor (2) steuernde Steuerwegeventileinrichtung (10) angeschlossen ist und dass der weitere Antriebsmotor (6) der Seilauswerferrolle (7) als Hydraulikmotor ausgebildet ist, der mittels einer ersten Anschlussleitung (25) und einer zweiten Anschlussleitung (26) an eine den weiteren Antriebsmotor (6) steuernde weitere Steuerwegeventileinrichtung (20) angeschlossen ist, wobei die den Antriebsmotor (2) der Seiltrommel (3) steuernde Steuerwegeventileinrichtung (10) und die den weiteren Antriebsmotor (6) der Seilauswerferrolle (7) steuernde weitere Steuerwegeventileinrichtung (20) derart betrieben werden, dass beim Seilabspulen des Seils (4) von der Seiltrommel (3) und beim Seilaufspulen des Seils (4) auf die Seiltrommel (3) in dem Abschnitt des Seils (4) zwischen der Seiltrommel (3) und der Seilauswerferrolle (7) die Mindestseilvorspannung, insbesondere eine konstante Mindestseilvorspannung, erzeugt wird, wobei die Steuerwegeventileinrichtung (10) und die weitere Steuerwegeventileinrichtung (20) von einer in der Fördermenge verstellbaren Pumpenvorrichtung (P) mit Druckmittel versorgt wird und die den weiteren, als Hydraulikmotor ausgebildeten Antriebsmotor (6) der Seilauswerferrolle (7) steuernde weitere Steuerwegeventileinrichtung (20) beim Seilaufspulen und beim Seilabspulen in Richtung einer Abspulsteuerstellung (20b) betätigt wird, in der eine Förderleitung (21) der Pumpenvorrichtung (P) mit der ersten Anschlussleitung (25) verbunden ist und die zweite Anschlussleitung (26) mit einer Tankleitung (24) verbunden ist.

2. Verfahren nach Anspruch 1, **dadurch gekennzeichnet, dass** die Pumpenvorrichtung (P) eine erste in der Fördermenge verstellbare Verstellpumpe (12) aufweist, die die Steuerwegeventileinrichtung (10) mit Druckmittel versorgt, und eine zweite in der Fördermenge verstellbare Verstellpumpe (22) aufweist, die die weitere Steuerwegeventileinrichtung (20) mit Druckmittel versorgt.

3. Verfahren nach Anspruch 1 oder 2, **dadurch gekennzeichnet, dass** der Antriebsmotor (2) der Seiltrommel (3) und der weitere Antriebsmotor (6) der Seilauswerferrolle (7) derart betrieben werden, dass beim Seilabspulen des Seils (4) von der Seiltrommel (3) der die Seiltrommel (3) antreibende Antriebsmotor (2) in einem Motorbetrieb oder in einem Umlaufbetrieb betrieben wird und der die Seilauswerferrolle (7) antreibende weitere Antriebsmotor (10) in einem Motorbetrieb betrieben wird, wobei die Seilabspulgeschwindigkeit von dem im Motorbetrieb betriebenen, die Seilauswerferrolle (7) antreibenden weiteren Antriebsmotor (6) bestimmt wird.

4. Verfahren nach einem der Ansprüche 1 bis 3, **dadurch gekennzeichnet, dass** beim Seilabspulen der Antriebsmotor (2) der Seiltrommel (3) in Abhängigkeit von der Belastung des weiteren Antriebsmotors (6) der Seilauswerferrolle (7) unterstützend betrieben wird.

5. Verfahren nach einem der Ansprüche 1 bis 4, **dadurch gekennzeichnet, dass** der Antriebsmotor (2) der Seiltrommel (3) und der weitere Antriebsmotor (6) der Seilauswerferrolle (7) derart betrieben werden, dass beim Seilaufspulen des Seils (4) auf die Seiltrommel (3) der die Seiltrommel (3) antreibende Antriebsmotor (2) in einem Motorbetrieb betrieben wird und der weitere Antriebsmotor (6) in einem Pumpenbetrieb betrieben wird, in dem der weitere Antriebsmotor (6) von der Seilauswerferrolle (7) angetrieben wird, wobei die Seilaufspulgeschwindigkeit von dem im Motorbetrieb betriebenen, die Seiltrommel (2) antreibenden Antriebsmotor (3) bestimmt wird.

6. Verfahren nach einem der Ansprüche 1 bis 5, **dadurch gekennzeichnet, dass** die den Antriebsmotor (2) der Seiltrommel (3) steuernde Steuerwegeventileinrichtung (10) beim Seilaufspulen in Richtung einer Aufspulsteuerstellung (10b) betätigt wird, in der eine Förderleitung (11) der Pumpenvorrichtung (P) mit der ersten Druckmittelleitung (15) verbunden ist und die zweite Druckmittelleitung (16) mit einer Tankleitung (14) verbunden ist, und die den Antriebsmotor (2) der Seiltrommel (3) steuernde Steuerwegeventileinrichtung (10) beim Seilabspulen in Richtung einer Abspulsteuerstellung (10c) betätigt wird, in der die Förderleitung (11) der Pumpenvorrichtung (P) mit der zweiten Druckmittelleitung (16) verbunden ist und die erste Druckmittelleitung (15) mit der Tankleitung (14) verbunden ist.

7. Verfahren nach einem der Ansprüche 1 bis 6, **dadurch gekennzeichnet, dass** der ersten Anschlussleitung (25) ein Druckbegrenzungsventil (27) zugeordnet ist, über das beim Seilaufspulen im geöffneten Zustand der von dem im Pumpenbetrieb betriebenen weiteren Antriebsmotor (6) geförderte Volumenstrom zu einem Behälter (13) abgeführt wird.

8. Verfahren nach einem der Ansprüche 1 bis 7, **dadurch gekennzeichnet, dass** der zweiten Anschlussleitung (26) ein Nachsaugeventil (28) zugeordnet ist, über das beim Seilaufspulen im geöffneten Zustand von dem im Pumpenbetrieb betriebenen weiteren Antriebsmotor (6) Druckmittel aus einem Behälter (13) angesaugt wird.

9. Verfahren nach einem der Ansprüche 6 bis 8, **dadurch gekennzeichnet, dass** beim Seilaufspulen die den weiteren Antriebsmotor (6) der Seilauswerferrolle (7) steuernde weitere Steuerwegeventileinrichtung (20) in Richtung der Abspulsteuerstellung (20b) betätigt wird und zeitlich anschließend die den Antriebsmotor (2) der Seiltrommel (3) steuernde Steuerwegeventileinrichtung (10) in Richtung der Aufspulsteuerstellung (10b) betätigt wird.

10. Verfahren nach einem der Ansprüche 6 bis 9, **dadurch gekennzeichnet, dass** beim Seilabspulen die den weiteren Antriebsmotor (6) der Seilauswerferrolle (7) steuernde weitere Steuerwegeventileinrichtung (20) in Richtung der Abspulsteuerstellung (20b) betätigt wird und zeitlich anschließend die den Antriebsmotor (2) der Seiltrommel (3) steuernde Steuerwegeventileinrichtung (10) in Richtung der Abspulsteuerstellung (10c) betätigt wird.

11. Verfahren nach einem der Ansprüche 6 bis 10, **dadurch gekennzeichnet, dass** eine mit dem Antriebsmotor (2) der Seiltrommel (3) in Wirkverbindung stehende Bremseinrichtung (9) in eine Lösestellung betätigt wird, bevor beim Seilaufspulen die den Antriebsmotor (2) der Seiltrommel (3) steuernde Steuerwegeventileinrichtung (10) in Richtung der Aufspulsteuerstellung (10b) betätigt wird oder bevor beim Seilabspulen die den Antriebsmotor (2) der Seiltrommel (3) steuernde Steuerwegeventileinrichtung (10) in Richtung der Abspulsteuerstellung (10c) betätigt wird.

12. Verfahren nach Anspruch 11, **dadurch gekennzeichnet, dass** eine die Druckmittelleitungen (15, 16) verbindende Bypassventileinrichtung (45) vorgesehen ist, die in einer die beiden Druckmittelleitungen (15, 16) verbindenden Verbindungsleitung (46) angeordnet ist und die eine Sperrstellung (45a) und eine Durchflussstellung (45b) aufweist, wobei zeitlich zuerst die Bypassventileinrichtung (45) in die Sperrstellung (45a) betätigt wird und zeitlich anschließend die Bremseinrichtung (9) in die Lösestellung beaufschlagt wird.

13. Verfahren nach einem der Ansprüche 1 bis 11, **dadurch gekennzeichnet, dass** in einer die erste Druckmittelleitung (15) mit der zweiten Druckmittelleitung (16) verbindenden Leitung (40) ein in Richtung zur ersten Druckmittelleitung (15) öffnendes, federvorgespanntes Sperrventil (41), insbesondere Rückschlagventil, angeordnet ist, mit dem beim Seilabspulen der den Antriebsmotor (2) der Seiltrommel (3) antreibende Druck begrenzt wird.

14. Verfahren nach einem der Ansprüche 1 bis 13, **dadurch gekennzeichnet, dass** in einer die erste Druckmittelleitung (15) mit der zweiten Druckmittelleitung (16) verbindenden Verbindungsleitung (100) ein in Richtung zur ersten Druckmittelleitung (15) öffnendes, unvorgespanntes Sperrventil (101), insbesondere Rückschlagventil, angeordnet ist, wobei in der Verbindungsleitung (100) ein in Abhängigkeit von dem Druck in der ersten Anschlussleitung (25) gesteuertes Ventil (102) angeordnet ist, das eine Sperrstellung (102a) und eine Durchflussstellung (102b) aufweist und in Abhängigkeit von dem Druck in der ersten Anschlussleitung (25) in Richtung der Sperrstellung (102a) betätigt wird.

15. Forstseilwinde, die eine von einem Antriebsmotor (2) angetriebene Seiltrommel (3) aufweist, auf der ein Seil (4) aufgespult ist, und eine von einem weiteren Antriebsmotor (6) angetriebene Seilauswerferrolle (7) für das Seil (4) aufweist, wobei das Seil (4) von der Seiltrommel (3) zur Seilauswerferrolle (7) geführt ist und an der Seilauswerferrolle (7) umgelenkt ist, **dadurch gekennzeichnet, dass** eine den Betrieb des Antriebsmotors (2) der Seiltrommel (3) und den Betrieb des weiteren Antriebsmotors (6) der Seilauswerferrolle (7) steuernde elektronische Steuereinrichtung (30) vorgesehen ist, die ein Verfahren nach einem der vorangegangenen Ansprüche ausführt und dass der Antriebsmotor (2) der Seiltrommel (3) als Hydraulikmotor ausgebildet ist, der mittels einer ersten Druckmittelleitung (15) und einer zweiten Druckmittelleitung (16) an eine den Antriebsmotor (2) steuernde Steuerwegeventileinrichtung (10) angeschlossen ist und dass der weitere Antriebsmotor (6) der Seilauswerferrolle (7) als Hydraulikmotor ausgebildet ist, der mittels einer ersten Anschlussleitung (25) und einer zweiten Anschlussleitung (26) an eine den weiteren Antriebsmotor (6) steuernde Steuerwegeventileinrichtung (20) angeschlossen ist, wobei die Steuerwegeventileinrichtung (10) und die weitere Steuerwegeventileinrichtung (20) von einer in der Fördermenge verstellbaren Pumpenvorrichtung (P) mit Druckmittel versorgt sind, wobei die den Antriebsmotor (2) der Seiltrommel (3) steuernde Steuerwegeventileinrichtung (10) und die den weiteren Antriebsmotor (6) der Seilauswerferrolle (7) steuernde Steuerwegeventileinrichtung (20) von der elektronischen Steuereinrichtung (30) angesteuert sind, derart, dass die den weiteren, als Hydraulikmotor ausgebildeten Antriebsmotor (6) der Seilauswerferrolle (7) steuernde weitere Steuerwegeventileinrichtung (20) beim Seilaufspulen und beim Seilabspulen in Richtung einer Abspulsteuerstellung (20b) betätigt wird, in der eine Förderleitung (21) der Pumpenvorrichtung (P) mit der ersten Anschlussleitung (25) verbunden ist und die zweite Anschlussleitung (26) mit einer Tankleitung (24) verbunden ist.

## Claims

1. Method for operating a forestry cable winch (1) which has a cable drum (3) driven by a drive motor (2) and on which a cable (4) is wound, and a cable ejector roller (7) driven by a further drive motor (6) for the cable (4), wherein the cable (4) is guided from the cable drum (3) to the cable ejector roller (7) and is deflected at the cable ejector roller (7), wherein the drive motor (2) of the cable drum (3) and the further drive motor (6) of the cable ejector roller (7) are operated in such a manner that, when unwinding the cable (4) from the cable drum (3) and when winding the cable (4) onto the cable drum (3), a minimum cable preload, in particular a constant minimum cable preload, is generated in the portion of the cable (4) between the cable drum (3) and the cable ejector roller (7), **characterized in that** the drive motor (2) of the cable drum (3) is configured as a hydraulic motor which is connected by means of a first pressure medium line (15) and a second pressure medium line (16) to a directional control valve device (10) that controls the drive motor (2), and **in that** the further drive motor (6) of the cable ejector roller (7) is configured as a hydraulic motor which is connected by means of a first connection line (25) and a second connection line (26) to a further directional control valve device (20) that controls the further drive motor (6), wherein the directional control valve device (10) that controls the drive motor (2) of the cable drum (3) and the further directional control valve device (20) that controls the further drive motor (6) of the cable ejector roller (7) are operated in such a manner that, when unwinding the cable (4) from the cable drum (3) and when winding the cable (4) onto the cable drum (3), the minimum cable preload, in particular a constant minimum cable preload, is generated in the portion of the cable (4) between the cable drum (3) and the cable ejector roller (7), wherein the directional control valve device (10) and the further directional control valve device (20) are supplied with pressure medium by a pump device (P) which is adjustable in terms of the delivery quantity, and the further directional control valve device (20) that controls the further drive motor (6), configured as a hydraulic motor, of the cable ejector roller (7), when winding the cable and when unwinding the cable is activated in the direction of an unwinding control position (20b) in which a delivery line (21) of the pump device (P) is connected to the first connection line (25), and the second connection line (26) is connected to a tank line (24).

2. Method according to Claim 1, **characterized in that** the pump device (P) has a first variable displacement pump (12) which is adjustable in terms of delivery quantity and supplies the directional control valve device (10) with pressure medium, and a second variable displacement pump (22) which is adjustable in terms of delivery quantity and supplies the further directional control valve device (20) with pressure medium.

3. Method according to Claim 1 or 2, **characterized in that** the drive motor (2) of the cable drum (3) and the further drive motor (6) of the cable ejector roller (7) are operated in such a manner that, when unwinding the cable (4) from the cable drum (3), the drive motor (2) driving the cable drum (3) is operated in a motor mode or in a revolving mode, and the further drive motor (10) driving the cable ejector roller (7) is operated in a motor mode, wherein the cable unwinding speed is determined by the further drive motor (6) which is operated in the motor mode and drives the cable ejector roller (7).

4. Method according to one of Claims 1 to 3, **characterized in that**, when unwinding the cable, the drive motor (2) of the cable drum (3) is operated in a supporting manner as a function of the loading of the further drive motor (6) of the cable ejector roller (7).

5. Method according to one of Claims 1 to 4, **characterized in that** the drive motor (2) of the cable drum (3) and the further drive motor (6) of the cable ejector roller (7) are operated in such a manner that, when winding the cable (4) onto the cable drum (3), the drive motor (2) driving the cable drum (3) is operated in a motor mode, and the further drive motor (6) is operated in a pump mode in which the further drive motor (6) is driven by the cable ejector roller (7), wherein the cable winding speed is determined by the drive motor (3) which is operated in the motor mode and drives the cable drum (2).

6. Method according to one of Claims 1 to 5, **characterized in that** the directional control valve device (10) that controls the drive motor (2) of the cable drum (3), when winding the cable, is activated in the direction of a winding control position (10b) in which a delivery line (11) of the pump device (P) is connected to the first pressure medium line (15), and the second pressure medium line (16) is connected to a tank line (14), and the directional control valve device (10) that controls the drive motor (2) of the cable drum (3), when unwinding the cable, is activated in the direction of an unwinding control position (10c) in which the delivery line (11) of the pump device (P) is connected to the second pressure medium line (16), and the first pressure medium line (15) is connected to the tank line (14).

7. Method according to one of Claims 1 to 6, **characterized in that** the first connection line (25) is assigned a pressure-limiting valve (27) by way of which in the open state, when winding the cable, the volumetric flow delivered by the further drive motor (6) operated in pump mode is discharged to a container (13).

8. Method according to one of Claims 1 to 7, **characterized in that** the second connection line (26) is assigned a suction valve (28) by way of which in the open state, when winding the cable, pressure medium is inducted from a container (13) by the further drive motor (6) operated in pump mode.

9. Method according to one of Claims 6 to 8, **characterized in that**, when winding the cable, the further directional control valve device (20) that controls the further drive motor (6) of the cable ejector roller (7) is activated in the direction of the unwinding control position (20b) and, temporally thereafter, the directional control valve device (10) that controls the drive motor (2) of the cable drum (3) is activated in the direction of the winding control position (10b).

10. Method according to one of Claims 6 to 9, **characterized in that**, when unwinding the cable, the further directional control valve device (20) that controls the further drive motor (6) of the cable ejector roller (7) is activated in the direction of the unwinding control position (20b) and, temporally thereafter, the directional control valve device (10) that controls the drive motor (2) of the cable drum (3) is activated in the direction of the unwinding control position (10c).

11. Method according to one of Claims 6 to 10, **characterized in that** a brake device (9) which is operatively connected to the drive motor (2) of the cable drum (3) is activated to a release position, before, while winding the cable, the directional control valve device (10) that controls the drive motor (2) of the cable drum (3) is activated in the direction of the winding control position (10b), or before, when unwinding the cable, the directional control valve device (10) that controls the drive motor (2) of the cable drum (3) is activated in the direction of the unwinding control position (10c).

12. Method according to Claim 11, **characterized in that** a bypass valve device (45) is provided, which connects the pressure medium lines (15, 16) and which is disposed in a connecting line (46) connecting the two pressure medium lines (15, 16), and which has a blocking position (45a) and a throughflow position (45b), wherein temporally first the bypass valve device (45) is activated to the blocking position (45a) and temporally thereafter the brake device (9) is impinged to the release position.

13. Method according to one of Claims 1 to 11, **characterized in that** disposed in a line (40) connecting the first pressure medium line (15) to the second pressure medium line (16) is a spring-preloaded shut-off valve (41), in particular a check valve, which opens in the direction of the first pressure medium line (15) and by way of which the pressure driving the drive motor (2) of the cable drum (3) is delimited when unwinding the cable.

14. Method according to one of Claims 1 to 13, **characterized in that** disposed in a connecting line (100) connecting the first pressure medium line (15) to the second pressure medium line (16) is a non-preloaded shut-off valve (101), in particular a check valve, which opens in the direction of the first pressure medium line (15), wherein disposed in the connecting line (100) is a valve (102) which is controlled as a function of the pressure in the first connection line (25) and has a blocking position (102a) and a throughflow position (102b) and is actuated in the direction of the blocking position (102a) as a function the pressure in the first connection line (25).

15. Forestry cable winch which has a cable drum (3) which is driven by a drive motor (2) and on which a cable (4) is wound, and a cable ejector roller (7) driven by a further drive motor (6) for the cable (4), wherein the cable (4) is guided from the cable drum (3) to the cable ejector roller (7) and is deflected at the cable ejector roller (7), **characterized in that** provided is an electronic control device (30) which controls the operation of the drive motor (2) of the cable drum (3) and the operation of the further drive motor (6) of the cable ejector roller (7), and which carries out a method according to one of the preceding claims, and **in that** the drive motor (2) of the cable drum (3) is configured as a hydraulic motor which is connected by means of a first pressure medium line (15) and a second pressure medium line (16) to a directional control valve device (10) that controls the drive motor (2), and **in that** the further drive motor (6) of the cable ejector roller (7) is configured as a hydraulic motor which is connected by means of a first connection line (25) and a second connection line (26) to a directional control valve device (20) that controls the further drive motor (6), wherein the directional control valve device (10) and the further directional control valve device (20) are supplied with pressure medium by a pump device (P) which is adjustable in terms of delivery quantity, wherein the directional control valve device (10) that controls the drive motor (2) of the cable drum (3) and the directional control valve device (20) that controls the further drive motor (6) of the cable ejector roller (7) are actuated by the electronic control device (30) in such a manner that the further directional control valve device (20) that controls the further drive motor (6), configured as a hydraulic motor, of the cable ejector roller (7),when winding the cable and when unwinding the cable is activated in the direction of an unwinding control position (20b) in which a delivery line (21) of the pump device (P) is connected to the first connection line (25), and the second connection line (26) is connected to a tank line (24).

## Revendications

1. Procédé destiné à faire fonctionner un treuil forestier (1), qui comporte un tambour de câble (3) entraîné par un moteur d'entraînement (2), sur lequel un câble (4) est enroulé, et qui comporte un rouleau éjecteur de câble (7) pour le câble (4) entraîné par un autre moteur d'entraînement (6), le câble (4) étant guidé depuis le tambour de câble (3) vers le rouleau éjecteur de câble (7) et étant dévié sur le rouleau éjecteur de câble (7), le moteur d'entraînement (2) du tambour de câble (3) et l'autre moteur d'entraînement (6) du rouleau éjecteur de câble (7) fonctionnant de telle manière qu'une précontrainte de câble minimale, en particulier une précontrainte de câble minimale constante, est produite lors du déroulement de câble du câble (4) du tambour de câble (3) et lors de l'enroulement de câble du câble (4) sur le tambour de câble (3) dans le tronçon du câble (4) entre le tambour de câble (3) et le rouleau éjecteur de câble (7), **caractérisé en ce que** le moteur d'entraînement (2) du tambour de câble (3) est formé comme un moteur hydraulique, qui est raccordé à un système à distributeur de commande (10) commandant le moteur d'entraînement (2) au moyen d'une première conduite d'agent sous pression (15) et d'une deuxième conduite d'agent sous pression (16), et que l'autre moteur d'entraînement (6) du rouleau éjecteur de câble (7) est formé comme un moteur hydraulique, qui est raccordé à un autre système à distributeur de commande (20) commandant l'autre moteur d'entraînement (6) au moyen d'une première conduite de raccordement (25) et d'une deuxième conduite de raccordement (26), le système à distributeur de commande (10) commandant le moteur d'entraînement (2) du tambour de câble (3) et l'autre système à distributeur de commande (20) commandant l'autre moteur d'entraînement (6) du rouleau éjecteur de câble (7) fonctionnant de telle manière que la précontrainte de câble minimale, en particulier une précontrainte de câble minimale constante, est produite dans le tronçon du câble (4) entre le tambour de câble (3) et le rouleau éjecteur de câble (7) lors du déroulement de câble du câble (4) du tambour de câble (3) et lors de l'enroulement de câble du câble (4) sur le tambour de câble (3), le système à distributeur de commande (10) et l'autre système à distributeur de commande (20) étant alimentés en agent sous pression par un dispositif de pompe (P) dont le débit est ajustable et l'autre système à distributeur de commande (20) commandant l'autre moteur d'entraînement (6) formé comme un moteur hydraulique du rouleau éjecteur de câble (7) étant actionné lors de l'enroulement de câble et lors du déroulement de câble en direction d'une position de commande de déroulement (20b), dans laquelle une conduite de refoulement (21) du dispositif de pompe (P) est reliée à la première conduite de raccordement (25) et la deuxième conduite de raccordement (26) est reliée à une conduite de réservoir (24).

2. Procédé selon la revendication 1, **caractérisé en ce que** le dispositif de pompe (P) comporte une première pompe à cylindrée variable (12) dont le débit est ajustable, qui alimente le système à distributeur de commande (10) en agent sous pression, et comporte une deuxième pompe à cylindrée variable (22) dont le débit est ajustable, qui alimente l'autre système à distributeur de commande (20) en agent sous pression.

3. Procédé selon la revendication 1 ou 2, **caractérisé en ce que** le moteur d'entraînement (2) du tambour de câble (3) et l'autre moteur d'entraînement (6) du rouleau éjecteur de câble (7) fonctionnent de telle manière que, lors du déroulement de câble du câble (4) du tambour de câble (3), le moteur d'entraînement (2) entraînant le tambour de câble (3) fonctionne dans un mode moteur ou dans un mode circulation et l'autre moteur d'entraînement (10) entraînant le rouleau éjecteur de câble (7) fonctionne dans un mode moteur, la vitesse de déroulement de câble étant définie par l'autre moteur d'entraînement (6) fonctionnant dans le mode moteur, entraînant le rouleau éjecteur de câble (7).

4. Procédé selon l'une des revendications 1 à 3, **caractérisé en ce que** lors du déroulement de câble, le moteur d'entraînement (2) du tambour de câble (3) fonctionne avec un mode d'assistance en fonction de la charge de l'autre moteur d'entraînement (6) du rouleau éjecteur de câble (7).

5. Procédé selon l'une des revendications 1 à 4, **caractérisé en ce que** le moteur d'entraînement (2) du tambour de câble (3) et l'autre moteur d'entraînement (6) du rouleau éjecteur de câble (7) fonctionnent de telle manière que, lors de l'enroulement de câble du câble (4) sur le tambour de câble (3), le moteur d'entraînement (2) entraînant le tambour de câble (3) fonctionne dans un mode moteur et l'autre moteur d'entraînement (6) fonctionne dans un mode pompe, dans lequel l'autre moteur d'entraînement (6) est entraîné par le rouleau éjecteur de câble (7), la vitesse d'enroulement de câble étant définie par le moteur d'entraînement (3) fonctionnant dans le mode moteur, entraînant le tambour de câble (2).

6. Procédé selon l'une des revendications 1 à 5, **caractérisé en ce que** le système à distributeur de commande (10) commandant le moteur d'entraînement (2) du tambour de câble (3) est actionné lors de l'enroulement de câble en direction d'une position de commande d'enroulement (10b), dans laquelle une conduite de refoulement (11) du dispositif de pompe (P) est reliée à la première conduite d'agent sous pression (15) et la deuxième conduite d'agent sous pression (16) est reliée à une conduite de réservoir (14), et le système à distributeur de commande (10) commandant le moteur d'entraînement (2) du tambour de câble (3) est actionné lors du déroulement de câble en direction d'une position de commande de déroulement (10c), dans laquelle la conduite de refoulement (11) du dispositif de pompe (P) est reliée à la deuxième conduite d'agent sous pression (16) et la première conduite d'agent sous pression (15) est reliée à la conduite de réservoir (14).

7. Procédé selon l'une des revendications 1 à 6, **caractérisé en ce qu'**est associé à la première conduite de raccordement (25) une soupape de limitation de pression (27), par laquelle, lors de l'enroulement de câble, dans l'état ouvert, le débit volumique refoulé par l'autre moteur d'entraînement (6) fonctionnant dans le mode pompe est évacué vers un contenant (13).

8. Procédé selon l'une des revendications 1 à 7, **caractérisé en ce qu'**est associé à la deuxième conduite de raccordement (26) une soupape de réaspiration (28), par laquelle, lors de l'enroulement de câble, dans l'état ouvert, de l'agent sous pression provenant du contenant (13) est aspiré par l'autre moteur d'entraînement (6) fonctionnant dans le mode pompe.

9. Procédé selon l'une des revendications 6 à 8, **caractérisé en ce que** lors de l'enroulement de câble, l'autre système à distributeur de commande (20) commandant l'autre moteur d'entraînement (6) du rouleau éjecteur de câble (7) est actionné en direction de la position de commande de déroulement (20b) et, de manière consécutive dans le temps, le système à distributeur de commande (10) commandant le moteur d'entraînement (2) du tambour de câble (3) est actionné en direction de la position de commande d'enroulement (10b).

10. Procédé selon l'une des revendications 6 à 9, **caractérisé en ce que** lors du déroulement de câble, l'autre système à distributeur de commande (20) commandant l'autre moteur d'entraînement (6) du rouleau éjecteur de câble (7) est actionné en direction de la position de commande de déroulement (20b) et, de manière consécutive dans le temps, le système à distributeur de commande (10) commandant le moteur d'entraînement (2) du tambour de câble (3) est actionné en direction de la position de commande de déroulement (10c).

11. Procédé selon l'une des revendications 6 à 10, **caractérisé en ce qu'**un système de freinage (9) relié de manière fonctionnelle au moteur d'entraînement (2) du tambour de câble (3) est actionné dans une position de desserrage avant que, lors de l'enroulement de câble, le système à distributeur de commande (10) commandant le moteur d'entraînement (2) du tambour de câble (3) ne soit actionné en direction de la position de commande d'enroulement (10b) ou avant que, lors du déroulement de câble, le système à distributeur de commande (10) commandant le moteur d'entraînement (2) du tambour de câble (3) ne soit actionné en direction de la position de commande de déroulement (10c).

12. Procédé selon la revendication 11, **caractérisé en ce qu'**un système de soupape de dérivation (45) reliant les conduites d'agent sous pression (15, 16) est prévu, lequel est disposé dans une conduite de liaison (46) reliant les deux conduites d'agent sous pression (15, 16) et qui comporte une position de blocage (45a) et une position de passage (45b), le système de soupape de dérivation (45) étant actionné en premier lieu dans le temps dans la position de blocage (45a) et le système de freinage (9) étant soumis à une action dans la position de desserrage de manière consécutive dans le temps.

13. Procédé selon l'une des revendications 1 à 11, **caractérisé en ce qu'**est disposée, dans une conduite (40) reliant la première conduite d'agent sous pression (15) à la deuxième conduite d'agent sous pression (16), une soupape de blocage (41) précontrainte par ressort, s'ouvrant en direction de première conduite d'agent sous pression (15), en particulier une soupape anti-retour, avec laquelle la pression entraînant le moteur d'entraînement (2) du tambour de câble (3) est limitée lors du déroulement de câble.

14. Procédé selon l'une des revendications 1 à 13, **caractérisé en ce qu'**est disposée, dans une conduite de liaison (100) reliant la première conduite d'agent sous pression (15) à la deuxième conduite d'agent sous pression (16), une soupape de blocage (101) non précontrainte s'ouvrant en direction de la première conduite d'agent sous pression (15), en particulier une soupape anti-retour, une soupape (102) commandée en fonction de la pression dans la première conduite de raccordement (25), qui comporte une position de blocage (102a) et une position de passage (102b) et est actionnée en fonction de la pression dans la première conduite de raccordement (25) en direction de la position de blocage (102a) étant disposée dans la conduite de liaison (100).

15. Treuil forestier, qui comporte un tambour de câble (3) entraîné par un moteur d'entraînement (2), sur lequel un câble (4) est enroulé, et comporte un rouleau éjecteur de câble (7) pour le câble (4) entraîné par un autre moteur d'entraînement (6), le câble (4) étant guidé depuis le tambour de câble (3) vers le rouleau éjecteur de câble (7) et étant dévié sur le rouleau éjecteur de câble (7), **caractérisé en ce qu'**est prévu un système de commande (30) électronique commandant le fonctionnement du moteur d'entraînement (2) du tambour de câble (3) et le fonctionnement de l'autre moteur d'entraînement (6) du rouleau éjecteur de câble (7), qui exécute un procédé selon l'une des revendications précédentes, et que le moteur d'entraînement (2) du tambour de câble (3) est formé comme un moteur hydraulique, qui est raccordé à un système à distributeur de commande (10) commandant le moteur d'entraînement (2) au moyen d'une première conduite d'agent sous pression (15) et d'une deuxième conduite d'agent sous pression (16), et que l'autre moteur d'entraînement (6) du rouleau éjecteur de câble (7) est formé comme un moteur hydraulique, qui est raccordé à un système à distributeur de commande (20) commandant l'autre moteur d'entraînement (6) au moyen d'une première conduite de raccordement (25) et d'une deuxième conduite de raccordement (26), le système à distributeur de commande (10) et l'autre système à distributeur de commande (20) étant alimentés en agent sous pression par un dispositif de pompe (P) dont le débit est ajustable, le système à distributeur de commande (10) commandant le moteur d'entraînement (2) du tambour de câble (3) et le système à distributeur de commande (20) commandant l'autre moteur d'entraînement (6) du rouleau éjecteur de câble (7) étant pilotés par le système de commande (30) électronique de telle manière que l'autre système à distributeur de commande (20) commandant l'autre moteur d'entraînement (6), formé comme un moteur hydraulique, du rouleau éjecteur de câble (7) est actionné lors de l'enroulement de câble et lors du déroulement de câble en direction d'une position de commande de déroulement (20b), dans laquelle une conduite de refoulement (21) du dispositif de pompe (P) est reliée à la première conduite de raccordement (25) et la deuxième conduite de raccordement (26) est reliée à une conduite de réservoir (24).
